# FASCICULE DE BREVET EUROPEEN

(11) **EP 0 473 772 B1**
(45) Date de publication et mention de la délivrance du brevet: **06.10.1993**
(21) Numéro de dépôt: 91907250.4
(22) Date de dépôt: 26.03.1991
(51) Int. Cl.: F24F 3/16, F24F 13/00, B01D 46/18

(54) **DISPOSITIF DE FILTRATION ET DE STABILISATION DE PRESSION POUR INSTALLATION DE VENTILATION A DEBIT VARIABLE**
FILTERGERÄT UND DRUCKSTABILISIERER FÜR LÜFTUNGSANLAGEN MIT VARIABLEM DURCHFLUSS
FILTERING AND PRESSURE STABILISING DEVICE FOR A VARIABLE FLOW-RATE VENTILATING INSTALLATION

(30) Priorité: 26.03.1990 FR 9004279
(43) Date de publication de la demande: 11.03.1992
(73) Titulaire: SOCIETE D'ETUDE ET DE RECHERCHE EN VENTILATION ET AERAULIQUE S.E.R.V.A., 77600 Bussy-Saint-Georges (FR)
(72) Inventeur: JARDINIER, Pierre, F-93450 Gournay-s/Marne (FR); SIMONNOT, Jacques, F-77150 Lesigny (FR)
(74) Mandataire: Maureau, Philippe
(86) Numéro de dépôt international: FR9100241
(87) Numéro de publication internationale: WO9114903

(56) Documents cités:
- EP-A- 1 200 100
- GB-U- 23 455
- GB-U- 34 556
- ozzzzzzzzzzzzzzzzzzzzzzzzzzzzzzzzzzzzzzzzzzzzzzzzzzzzzzzzzzzzzzzzzzzzzzzzzzzzza gzzzzzzzzzzzzzzzzzzzzzzzzzzzzzzzzzzzzzzzzzzzzzzzzzzzzzzzzzzzzzzzzzzzzzzzzzzzzzb
- hzzzzzzzzzzzzzzzzzzzzzzzzzzzzzzzzzzzzzzzzzzzzzzzzzzzzzzzzzzzzzzzzzzzzzzzzzzzzzc izzzzzzzzzzzzzzzzzzzzzzzzzzzzzzzzzzzzzzzzzzzzzzzzzzzzzzzzzzzzzzzzzzzzzzzzzzzzzd
- 1zzzzzzzzzzzzzzzzzzzzzzzzzzzzzzzzzzzzzzzzzzzzzzzzzzzzzzzzzzzzzzzzzzzzzzzzzzzzzz 2zzzzzzzzzzzzzzzzzzzzzzzzzzzzzzzzzzzzzzzzzzzzzzzzzzzzzzzzzzzzzzzzzzzzzzzzzzzzzz 3zzzzzzzzzzzzzzzzzzzzzzzzzzzzzzzzzzzzzzzzzzzzzzzzzzzzzzzzzzzzzzzzzzzzzzzzzzzzzz 4zzzzzzzzzzzzzzzzzzzzzzzzzzzzzzzzzzzzzzzzzzende
- start, vor S war ein Blank
- start, vor s war blank

## Description

La présente invention a pour objet un dispositif de filtration et de stabilisation de pression pour installation de ventilation à débit variable.

Il est connu de réaliser des installations de ventilation d'air à débit variable, soit pour assurer des charges thermiques de valeur variable, soit pour modifier le débit en fonction des besoins des locaux à ventiler. Il est également connu, notamment dans des immeubles de bureaux ou dans des locaux industriels de réaliser une ventilation par insufflation qui permet de maîtriser le débit dans chaque pièce. Il est avantageux de disposer, en amont du ventilateur, un filtre qui soit susceptible d'épurer l'air insufflé à l'intérieur des différents locaux.

Il doit être noté que le filtre introduit des variations de la valeur de la pression disponible et par suite des variations de la valeur du débit qui n'est plus le débit souhaité.

Une première solution consiste à réaliser un nettoyage régulier des filtres. Toutefois ce nettoyage constitue une opération de maintenance qui est coûteuse, et qui ne permet pas une parfaite stabilisation de la pression, car même si le filtre est changé avant un encrassement complet, il fait varier la valeur de la pression disponible au fur et à mesure de son encrassement.

Il existe également des filtres à déroulement, c'est-à-dire des filtres d'une longueur supérieure à la longueur de l'ouverture d'introduction d'air auquelle est associé le filtre, ce filtre à déroulement coopérant avec un rouleau de dévidement et un rouleau d'enroulement qui sont entrainés en synchronisme à intervalle de temps régulier.

Outre le fait que ce filtre n'assure pas une parfaite stabilisation de la pression, il nécessite un remplacement fréquent si l'on ne veut pas arriver à un encrassement total, ce qui se traduit par un coût d'exploitation élevé.

Le document DE-A-2 338 048 concerne un dispositif comportant un filtre à déroulement auquel est associé un obturateur de position variable. Le but de ce dispositif est de neutraliser une partie utile du filtre lorsque le débit de ventilation diminue. Il s'agit donc d'adapter automatiquement la surface filtrante au débit variable, sans tenir compte du degré d'encrassement de cette surface filtrante. Ainsi, lorsque le débit est éloigné de la capacité maximale du dispositif de filtration, et que la surface non occultée du filtre oppose trop de résistance à l'air du fait de son encrassement, on procède au remplacement du filtre au lieu de dégager une surface filtrante plus importante. Ce mode de commande ne permet donc nullement de réaliser une économie de filtre.

Le but de l'invention est de fournir un dispositif qui soit susceptible de stabiliser la pression, en tenant compte d'une part, du débit d'air, et d'autre part, de l'encrassement du filtre, en vue de bénéficier de conditions de pression parfaitement régulières, tout en utilisant chaque filtre au maximum de ses capacités, c'est-à-dire en le conduisant jusqu'à un encrassement total, ce qui limite les dépenses en matière de filtre.

A cet effet, le dispositif qu'elle concerne, du type comprenant, associé à l'ouverture d'introduction d'air dans le groupe de ventilation, un filtre à avancement, équipé de moyens permettant le renouvellement de la partie utile du filtre disposée en regard de l'ouverture du passage d'air, et un élément obturateur, réalisé en un matériau imperméable, destiné à venir se plaquer contre le filtre, pour recouvrir celui-ci en tout ou partie, cet obturateur étant associé à des moyens de commande de son mouvement, les moyens de commande du mouvement étant reliés à un calculateur qui reçoit une information d'un capteur disposé dans la veine d'écoulement de fluide, est caractérisé en ce que le capteur assure la mesure de la pression à la sortie du groupe de ventilation, et en ce que le calculateur est agencé de façon telle que la stabilisation de pression soit réalisée tout d'abord en jouant sur la position de l'obturateur, puis, lorsque l'obturateur est en position totalement dégagée du filtre, par action sur les moyens de commande de celui-ci, pour réaliser au moins partiellement son renouvellement.

En pratique, lorsque le filtre est neuf, et que le débit est faible, l'obturateur recouvre fortement le filtre. Lorsque le filtre est encrassé ou lorsque le débit augmente, l'obturateur dégage une surface plus importante de filtre afin de maintenir la pression constante. Au fur et à mesure de l'encrassement du filtre, celui-ci est de plus en plus découvert par l'obturateur. Lorsque le filtre est entièrement découvert par l'obturateur, et que la valeur de la pression est inférieure à la valeur de consigne, le calculateur commande le remplacement d'une partie du filtre. Suivant le débit demandé, ce remplacement peut être plus ou moins important, et l'obturateur peut ensuite recouvrir de façon plus ou moins sensible le filtre, en fonction de l'encrassement de celui-ci et des débits demandés.

Outre le fait que ce dispositif permet de stabiliser la pression, il permet également d'augmenter le potentiel de filtration, puisque le filtre n'est pas renouvelé de façon systématique, et indépendamment de son état d'encrassement, mais seulement lorsqu'il est totalement encrassé. Il en résulte une durée d'utilisation plus longue d'un filtre de surface déterminée, et par suite une maintenance plus réduite qu'habituellement.

Selon une autre caractéristique de l'invention, le calculateur est asocié à un mécanisme de temporisation ne prenant en compte la valeur de la pression mesurée qu'à l'issue d'une certaine période de temps, assurant la prise en compte d'une valeur stabilisée de la pression.

Avantageusement, les moyens de commande du déplacement du filtre sont associés à des moyens de mesure de la valeur de ce déplacement, ces moyens de mesure réagissant et actionnant un système d'alarme si, à l'issue du remplacement d'une longueur déterminée de filtre, la pression n'est toujours pas stabilisée. Une telle hypothèse ne se présente qu'en cas de défaut de fonctionnement, ou en cas d'un appel de débit trop important dû par exemple au débranchement d'une partie du réseau.

Dans un tel cas, la logique du calculateur provoque l'arrêt de la régulation, et ne commence un nouveau processus de régulation qu'après que la pression dans le réseau soit rétablie. Cette disposition évite qu'en cas d'incident une surface trop importante de filtre propre soit dévidée de façon inutile.

Selon une première forme d'exécution de ce dispositif, le filtre est un filtre à avancement par déroulement, et est associé à un rouleau de dévidage freiné en rotation, et à un rouleau d'enroulement motorisé.

Pour sa part, l'obturateur est constitué par une feuille de matériau étanche à déroulement - enroulement, associée à un rouleau motorisé, et à un rouleau situé de l'autre côté de l'orifice d'aspiration de l'air, associé à des moyens d'enroulement élastique de fils ou câbles, fixés sur le bord libre de l'obturateur.

Afin d'assurer un bon placage de l'obturateur contre le filtre, I'extrémité amont du conduit d'aspiration d'air est équipée d'une surface support pour le filtre de forme convexe, par exemple en forme de tronçon de surface cylindrique d'axe parallèle aux axes des rouleaux de dévidement et d'enroulement du filtre et de l'obturateur, cette surface convexe étant matérialisée par un certain nombre de barrettes contre lesquelles prend appui le filtre.

Selon une autre forme d'exécution, ce dispositif comporte une enveloppe tubulaire étanche raccordable à ses deux extrémités à deux éléments de tubulure d'un réseau de ventilation, et contenant un élément tubulaire coaxial et de plus faible section comportant successivement une partie lisse reliée à l'une des ouvertures de l'enveloppe, une partie ajourée, et une extrémité effilée et lisse, l'espace annulaire compris entre l'élément tubulaire et l'enveloppe servant
- dans la zone où l'élément tubulaire est lisse, au logement d'un filtre tubulaire stocké sous forme plissée, ce filtre tubulaire recouvrant également la partie ajourée de l'élément tubulaire et J'extrémité effilée de celui-ci et étant associé à un mécanisme de traction l'entraînant vers un conteneur de récupération déporté latéralement par rapport à l'enveloppe tubulaire et,
- dans la zone où l'élément tubulaire est ajouré, au logement d'un obturateur mobile associé à des moyens de commande destinés à le déplacer pour qu'il recouvre plus ou moins le filtre recouvrant cette partie ajourée de l'élément tubulaire.

Dans ce dispositif, qui peut être intégré facilement dans un réseau de ventilation, compte tenu de sa forme, l'air est amené à une extrémité dans l'élément tubulaire central et passe, au niveau de la zone ajourée de celui-ci, et à travers le filtre, dans l'espace annulaire délimité extérieurement par l'enveloppe tubulaire, puis est évacué, à l'autre extrémité, de celle-ci. dans le réseau de ventilation.

Selon le mode de commande défini précédemment, l'obturateur recouvre plus ou moins la zone filtrante, et celle-ci est dévidée, afin de maintenir la pression constante.

De toute façon, l'invention sera bien comprise à l'aide de la description qui suit, en référence au dessin schématique annexé, représentant à titre d'exemple non limitatif, deux formes d'exécution de ce dispositif :
Figure 1 est une vue schématique en coupe longitudinale de l'ensemble d'un premier dispositif ;
Figure 2 est une vue à échelle agrandie de la partie du dispositif de figure 1 comportant le filtre et l'obturateur ;
Figures 3 à 6 sont quatre vues schématiques en perspective du filtre et de l'obturateur de figures 1 et 2, au cours de quatre phases de fonctionnement ;
Figure 7 est une vue -en perspective, partiellement arrachée, d'un second dispositif ;
Figures 8 et 9 sont deux vues, en coupe longitudinale, du dispositif de figure 7, au cours de deux phases de fonctionnement.

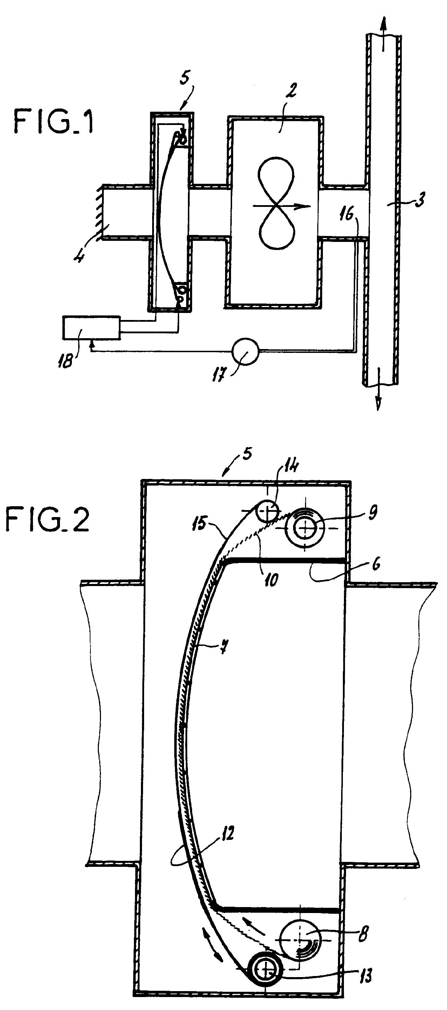

La figure 1 représente très schématiquement un système de ventilation comprenant un groupe de ventilation 2 destiné à insuffler de l'air dans des locaux par l'intermédiaire de conduits 3. L'air est prélevé à l'extérieur par un conduit 4, puis passe à travers un système de filtration 5 avant d'arriver au groupe de ventilation 2.

Le système de filtration 5 est représenté plus en détail à la figure 2. A cette figure est montré un élément tubulaire 6 disposé en amont du ventilateur, dont l'extrémité amont comporte une pluralité de barrettes 7 délimitant un tronçon de surface cylindrique de forme convexe. De part et d'autre du conduit 6 sont disposés un rouleau 8 freiné et un rouleau 9 motorisé, destinés respectivement au dévidement et à l'enroulement d'un filtre 10, obturant de façon perméable l'extrémité du tronçon de conduit 6, et prenant appui contre les barrettes 7, puisque les axes des rouleaux 8 et 9 sont parallèles aux barrettes 7.

En amont du filtre 10 est disposé un obturateur souple imperméable 12, associé à deux rouleaux, à savoir un rouleau 13 motorisé et un rouleau 14 à rappel élastique, le rouleau 13 servant au dévidement et à l'enroulement de l'obturateur 12, tandis que sur le rouleau à rappel élastique 14 passent des câbles 15 fixés sur le bord de l'obturateur. Le montage des rouleaux 13 et 14 est tel que l'obturateur se trouve toujours au contact du filtre 10, qu'il recouvre plus ou moins selon la valeur dont l'obturateur est dévidé du rouleau 13.

Comme montré à la figure 1, une prise de pression 16 est ménagée en aval du groupe de ventilation 2, un capteur de pression 17 fournissant des informations à une carte logique 18. Cette carte logique 18 commande d'une part, le positionnement de l'obturateur 12 vis-à-vis du filtre 10, et d'autre part, le dévidement du filtre 10 pour réaliser son remplacement partiel lorsqu'il est trop encrassé.

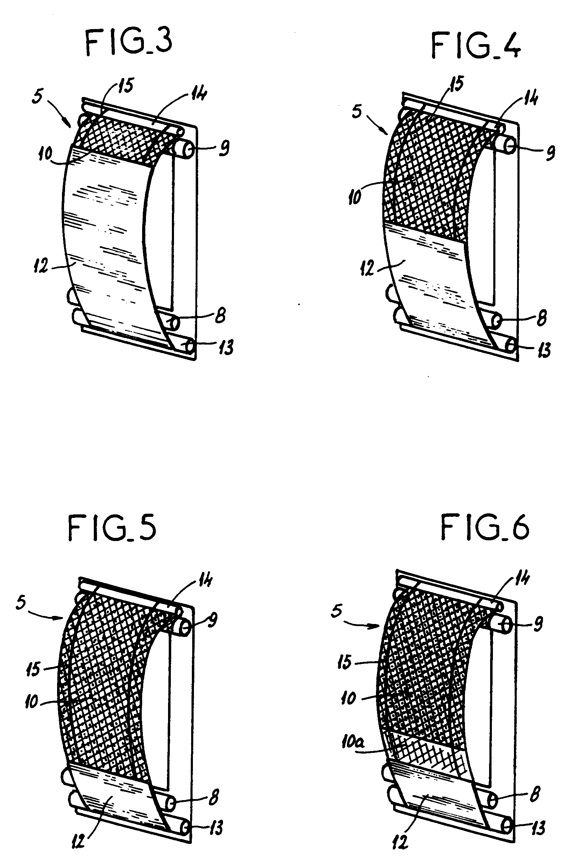

Les figures 3 à 6 représentent quatre phases d'utilisation du système de filtration. Lorsque le filtre est neuf, et que le débit est faible, l'obturateur 12 recouvre presque totalement le filtre. Dans la mesure où le débit augmente, afin de maintenir constante la pression, il convient d'offrir une surface de passage plus importante au niveau du filtre, de telle sorte que, comme montré à la figure 4, l'obturateur dégage une surface plus importante du filtre que dans le cas de la figure 3. Le même phénomène de dégagement du filtre se produit lorsque le débit n'augmentant pas, le filtre s'encrasse. La carte logique va donc commander le positionnement de l'obturateur par rapport au filtre, de telle sorte que la pression soit maintenue sensiblement constante. Lorsque le filtre se trouve totalement dégagé, comme montré à la figure 5, et que la valeur mesurée de la pression est trop basse, la carte logique donne une information de commande au rouleau motorisé 9 pour réaliser l'enroulement sur celui-ci d'un tronçon de filtre, correspondant à l'amenée dans la partie active d'une surface de filtre neuve 10a. En fonction du débit, cette surface 10a est suffisante, ou peut devenir trop importante auquel cas l'obturateur en recouvre une partie. Si au contraire le débit a tendance à augmenter et/ou si la partie 10a s'encrasse, il convient de réaliser à nouveau l'amenée d'un tronçon propre de filtre.

Il est intéressant de noter que ce dispositif permet non seulement de stabiliser la pression, mais également d'optimiser l'utilisation du filtre, qui n'est évacué que lorsqu'il est totalement encrassé.

Le dessin ne représente pas le dispositif de temporisation assurant que la pression mesurée est bien stable, ou le dispositif décrit précédemment qui est un dispositif d'alerte réagissant dans la mesure où la pression n'est pas corrigée après amenée au niveau de la surface de filtration d'une longueur de filtre propre d'une valeur déterminée.

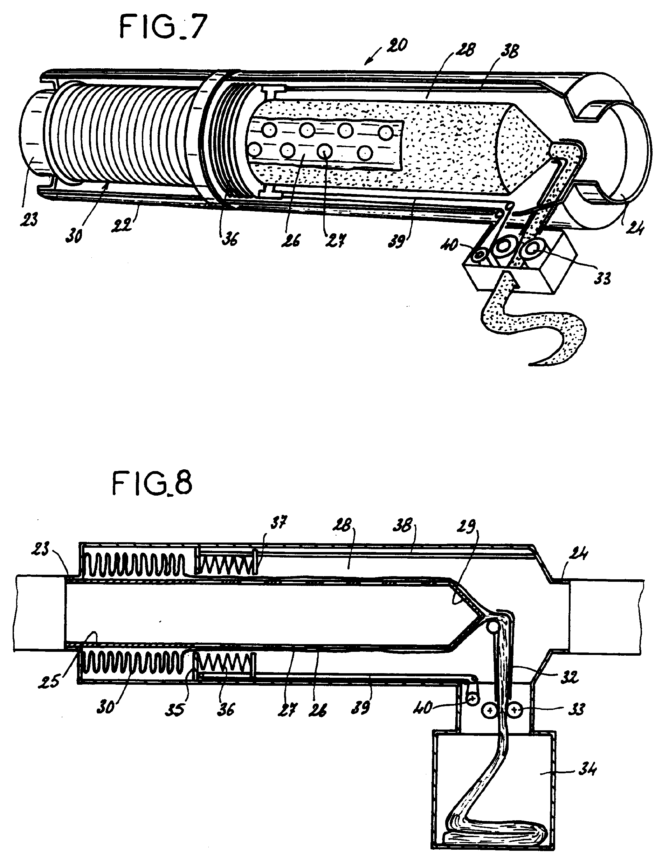

Les figures 7 à 9 représentent une seconde forme d'exécution de ce dispositif. Il n'est représenté à ces figures que le système de filtration proprement dit, correspondant à celui portant la référence 5 à la figure 1, étant précisé que ce nouveau dispositif désigné par la référence générale 20 est destiné à venir s'interposer dans le réseau de ventilation en amont du ventilateur 2. Ce dispositif de filtration est également associé à des organes de contrôle et de commande, tels que ceux désignés par les références 16,17 et 18 à la figure 1.

Le dispositif de filtration se présente, dans ce cas, sous la forme d'une enveloppe tubulaire étanche 22 comportant deux embouts de raccordement 23 et 24, à deux éléments tubulaires appartenant au réseau de ventilation. A l'intérieur de l'enveloppe tubulaire 22, est monté un élément tubulaire coaxial qui, dans la forme d'exécution représentée au dessin, est cylindrique, et comporte une première partie 25 associée avec étanchéité à l'embout de raccordement 23, cette partie 25 étant lisse, c'est-à-dire délimitée par une paroi pleine. La partie 25 est prolongée par une partie 26 ajourée, c'est-à-dire comportant des ouvertures 27 régulièrement réparties, susceptibles de faire communiquer son volume intérieur avec le volume annulaire 28 délimité entre l'enveloppe tubulaire extérieure et le tube 26. La partie ajourée 26 du tube se termine par une partie conique 29 délimitée par une paroi pleine. A l'extrémité amont du dispositif de filtration, l'espace annulaire 28 sert au montage sous forme d'un pliage accordéon d'une réserve d'un dispositif tubulaire filtrant 30. Ce dispositif filtrant 30 est déployé au contact de la partie ajourée du tube,qu'il enserre, avant de se refermer sur le cône 29, et d'être guidé à l'intérieur d'une goulotte 32, avec entraînement à l'aide de deux rouleaux 33 motorisés et entraînés en rotation en sens inverse l'un de l'autre, les deux rouleaux 33 réalisant un déplacement du dispositif filtrant vers un conteneur de récupération 34. Le stockage du dispositif filtrant sous forme d'un pliage accordéon permet de disposer d'une réserve de filtre tubulaire correspondant sensiblement à 40 fois la longueur de celui-ci en position déployée.

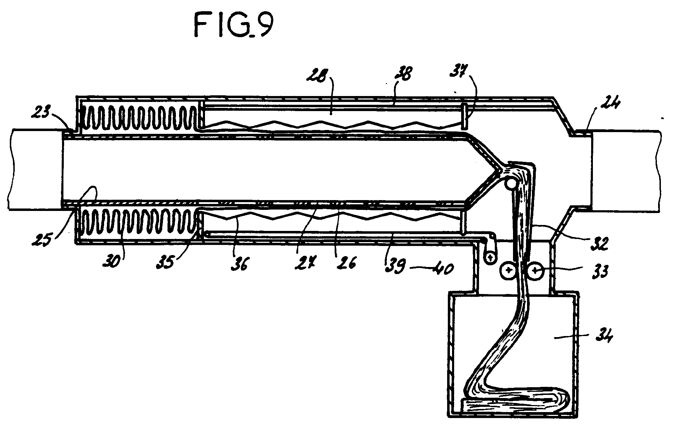

Dans l'espace annulaire 28 est disposée, entre la zone de stockage du filtre 30, et la partie disposée en aval et en regard du tube ajouré 26, une collerette 35 servant à la fixation d'une extrémité d'un élément obturateur tubulaire 36, réalisé en un matériau étanche, et susceptible de subir un pliage accordéon. L'autre extrémité de l'obturateur 36 est montée sur une collerette mobile 37, guidée longitudinalement sur des barres de guidage 38, et fixée sur une courroie sans fin 39 associée à des moyens d'entraînement dans les deux sens constitués par une poulie 40. Cette poulie motorisée 40 est commandée dans un sens de rotation ou dans l'autre, en fonction des informations reçues du calculateur 18. Cette seconde forme d'exécution du dispositif selon l'invention fonctionne exactement comme la première forme d'exécution, seules les formes respectives du passage de l'air, de l'élément filtrant, et de l'obturateur variant. La figure 8 représente ce second dispositif dans une position dans laquelle l'obturateur dégage presque complétement la zone de passage de l'air depuis l'intérieur du tube 25, 26 vers le volume annulaire 28, tandis que la figure 9 représente une position dans laquelle l'obturateur 36 est presque totalement déployé et recouvre presque totalement la surface filtrante.

Ce dispositif apporte une grande amélioration à la technique existante, tant d'un point de vue des performances de ce dispositif que du caractère économique de celui-ci.

A titre d'exemple, dans le cas de l'équipement d'un bureau dont le taux d'occupation varie tout au long de la journée, un filtre selon l'invention possède une durée de vie deux fois supérieure à celle d'un filtre à déroulement classique, toutes caractéristiques étant égales par ailleurs: efficacité du filtre, surface de filtration, taux de poussières dans l'air extérieur, bornes de déclenchement du filtre...

Il faut noter que l'obturateur pourrait être non pas à coulissement comme décrit précédemment, mais par exemple à rotation, ou encore, dans la seconde forme d'exécution, que la partie tubulaire ajourée pourrait être constituée par plusieurs barreaux délimitant un cylindre.

## Revendications

1. Dispositif de filtration et de stabilisation de pression pour installation de ventilation à débit variable, du type comprenant, associé à l'ouverture d'introduction d'air dans le groupe de ventilation, un filtre (10) à avancement, équipé de moyens permettant le renouvellement de la partie utile du filtre disposée en regard de l'ouverture du passage d'air, et un élément obturateur (12), réalisé en un matériau imperméable, destiné à venir se plaquer contre le filtre (10), pour recouvrir celui-ci en tout ou partie, cet obturateur étant associé à des moyens de commande de son mouvement, les moyens de commande du mouvement étant reliés à un calculateur (18) qui reçoit une information d'un capteur disposé dans la veine d'écoulement de fluide, caractérisé en ce que le capteur assure la mesure de la pression de fluide à la sortie du groupe de ventilation (2), et en ce que le calculateur (18) est agencé de façon telle que la stabilisation de pression soit réalisée tout d'abord en jouant sur la position de l'obturateur (12), puis, lorsque l'obturateur est en position totalement dégagée du filtre (10), par action sur les moyens de commande (8,9) de celui-ci, pour réaliser au moins partiellement son renouvellement.

2. Dispositif selon la revendications 1, caractérisé en ce que le calculateur (18) est associé à un mécanisme de temporisation ne prenant en compte la valeur de la pression mesurée qu'à l'issue d'une certaine période de temps, assurant la prise en compte d'une valeur stabilisée de la pression.

3. Dispositif selon l'une quelconque des revendications 1 et 2, caractérisé en ce que les moyens de commande (8,9) du déplacement du filtre (10) sont associés à des moyens de mesure de la valeur de ce déplacement, ces moyens de mesure réagissant et actionnant un système d'alarme si, à l'issue du remplacement d'une longueur déterminée de filtre, la pression n'est toujours pas stabilisée.

4. Dispositif selon l'une quelconque des revendications 1 à 3, caractérisé en ce que le filtre (10) est un filtre à avancement par déroulement, et est associé à un rouleau de dévidage (8) freiné en rotation, et à un rouleau d'enroulement (9) motorisé.

5. Dispositif selon l'une quelconque des revendications 1 à 4, caractérisé en ce que l'obturateur est constitué par une feuille (12) de matériau étanche à déroulement - enroulement, associée à un rouleau motorisé (13), et à un rouleau (14) situé de l'autre côté de l'orifice d'aspiration de l'air, associé à des moyens d'enroulement élastique de fils ou câbles (15), fixés sur le bord libre de l'obturateur.

6. Dispositif selon l'une quelconque des revendications 1 à 5, caractérisé en ce que l'extrémité amont du conduit (6) d'aspiration d'air est équipée d'une surface support pour le filtre de forme convexe, par exemple en forme de tronçon de surface cylindrique d'axe parallèle aux axes des rouleaux de dévidement et d'enroulement du filtre et de l'obturateur, cette surface convexe étant matérialisée par un certain nombre de barrettes (7) contre lesquelles prend appui le filtre (10).

7. Dispositif selon l'une quelconque des revendications 1 à 3, caractérisé en ce qu'il comporte une enveloppe tubulaire étanche (22) raccordable à ses deux extrémités à deux éléments de tubulure d'un réseau de ventilation, et contenant un élément tubulaire coaxial et de plus faible section comportant successivement une partie (25) lisse, reliée à l'une des ouvertures de l'enveloppe, une partie ajourée (26), et une extrémité effilée et lisse (29), l'espace annulaire (28) compris entre l'élément tubulaire et l'enveloppe servant,
- dans la zone où l'élément tubulaire est lisse, au logement d'un filtre tubulaire (30) stocké sous forme plissée, ce filtre tubulaire recouvrant également la partie ajourée (26) de l'élément tubulaire et l'extrémité effilée (29) de celui-ci et étant associé à un mécanisme de traction l'entraînant vers un conteneur de récupération (34) déporté latéralement par rapport à l'enveloppe tubulaire, et
- dans la zone où l'élément tubulaire est ajouré, au logement d'un obturateur mobile (36) associé à des moyens de commande destinés à le déplacer pour qu'il recouvre plus ou moins le filtre (30) recouvrant cette partie ajourée (26) de l'élément tubulaire.

8. Dispositif selon la revendication 7, caractérisé en ce que le mécanisme d'entraînement du filtre (30) comprend deux rouleaux (33) entraînés en sens inverse l'un de l'autre, entre lesquels est pincé le filtre, et disposés à la sortie d'une goulotte de guidage (32).

9. Dispositif selon la revendication 7, caractérisé en ce que l'obturateur (36) est réalisé en un matériau étanche, ayant subi un pliage en accordéon, dont l'une des extrémités est fixée sur une collerette (35) montée fixe dans l'espace annulaire (28), et dont l'autre extrémité est montée sur une collerette (37) guidée longitudinalement sur des barres (38) dans l'espace annulaire, et fixée sur une courroie sans fin (39), associée à des moyens (40) d'entraînement dans les deux sens.

## Patentansprüche

1. Vorrichtung zum Filtrieren und Druckstabilisieren für eine Belüftungsanlage mit wechselndem Förderstrom, bestehend aus einem Vorlauffilter (10) an der Lufteinlaßöffnung der Belüftungseinheit, der mit Mitteln versehen ist, die den Austausch des verwendbaren Filterteiles ermöglichen, der gegenüber der Luftdurchgangsöffnung angeordnet ist, und einem Verschlußelement (12), das aus einem undurchlässigen Material besteht und dazu bestimmt ist, gegen den Filter (10) zu dessen vollständiger oder teilweiser Abdeckung gepreßt zu werden, wobei der Verschluß mit Bewegungssteuermitteln verbunden ist und die Bewegungssteuermittel mit einem Rechner (18) verbunden sind, der eine Information eines Meßfühlers empfängt, der im Fluidströmungsgang angeordnet ist, dadurch gekennzeichnet, daß der Meßfühler die Messung des Fluiddrucks am Ausgang der Belüftungseinheit (2) vornimmt und daß der Rechner (18) so ausgerichtet ist, daß die Druckstabilisierung sogleich durch die Position des Verschlusses (12) erreicht wird und danach, wenn sich der Verschluß in einer vollständig vom Filter (10) gelösten Position befindet, durch die Inbetriebnahme seiner Steuermittel (8,9), um zumindest einen teilweisen Austausch durchzuführen.

2. Vorrichtung nach Anspruch 1, dadurch gekennzeichnet, daß der Rechner (18) mit einem Verzögerungsmechanismus verbunden ist, der den Wert des gemessenen Drucks erst am Ende einer bestimmten Zeitperiode berücksichtigt, wodurch die Berücksichtigung eines stabilisierten Druckwertes gewährleistet ist.

3. Vorrichtung nach einem der Ansprüche 1 und 2, dadurch gekennzeichnet, daß die Steuermittel (8, 9) zur Verstellung des Filters (10) mit Meßmitteln des Verstellwertes verbunden sind, wobei diese Meßmittel ansprechen und ein Alarmsystem aktivieren, wenn am Ende des Austausches einer bestimmten Filterlänge der Druck noch immer nicht stabilisiert ist.

4. Vorrichtung nach einem der Ansprüche 1 bis 3, dadurch gekennzeichnet, daß der Filter (10) ein Vorlauffilter durch Abspulen ist und mit einer in der Drehung gebremsten Abspulwalze (8) und einer motorbetriebenen Aufspulwalze (9) verbunden ist.

5. Vorrichtung nach einem der Ansprüche 1 bis 4, dadurch gekennzeichnet, daß der Verschluß aus einer dichten Abspul-/Aufspul-Materialfolie (12) besteht, die mit einer motorbetriebenen Walze (13) verbunden ist und mit einer Walze (14), die an der anderen Seite der Luftansaugöffnung angeordnet ist und mit elastischen Aufspulmitteln aus Fäden oder Kabeln (15) verbunden ist, die am freien Rand des Verschlusses befestigt sind.

6. Vorrichtung nach einem der Ansprüche 1 bis 5, dadurch gekennzeichnet, daß das oberstromige Ende der Luftansaugleitung (6) mit einer Trägerfläche für den Filter in konvexer Form ausgestattet ist, beispielsweise in der Form eines zylindrischen Flächenteils mit einer Achse, die zu den Achsen der Abspul- und Aufspulwalzen des Filters und des Verschlusses parallel ist, wobei diese konvexe Fläche durch eine bestimmte Anzahl von Stegen (18) gebildet wird, auf welchen der Filter (10) aufliegt.

7. Vorrichtung nach einem der Ansprüche 1 bis 3, dadurch gekennzeichnet, daß sie ein dichtes rohrförmiges Gehäuse (22) umfaßt, das an seinen beiden Enden mit zwei rohrförmigen Elementen eines Belüftungsnetzes verbunden werden kann und ein koaxiales rohrförmiges Element mit einem geringeren Querschnitt enthält, das der Reihe nach einen glatten Teil (25), der mit einer der Öffnungen des Gehäuses verbunden ist, einen gelochten Teil (26) und ein spitz zulaufendes und glattes Ende (29) umfaßt, wobei der ringförmige Raum (28) zwischen dem rohrförmigen Element und dem Gehäuse zu folgendem dient:
- in dem Bereich, in dem das rohrförmige Element glatt ist, zur Aufnahme eines rohrförmigen Filters (30), der in gefalteter Form gelagert ist, wobei dieser rohrförmige Filter auch den gelochten Teil (26) des rohrförmigen Elements und dessen spitz zulaufendes Ende (29) bedeckt und mit einem Zugmechanismus verbunden ist, der ihn zu einem Nutzungsbehälter (34) zieht, der seitlich in bezug auf das rohrförmige Gehäuse verschoben ist, und
- in dem Bereich, in dem das rohrförmige Element gelocht ist, zur Aufnahme eines beweglichen Verschlusses (36), der mit Steuermitteln verbunden ist, die zu seiner Verstellung dienen, so daß er den Filter (30), der diesen gelochten Teil (26) des rohrförmigen Elements bedeckt, mehr oder weniger verschließt.

8. Vorrichtung nach Anspruch 7, dadurch gekennzeichnet, daß der Antriebsmechanismus des Filters (30) zwei Walzen (33) umfaßt, die in entgegengesetzte Richtung zueinander angetrieben werden, zwischen welchen der Filter eingeklemmt ist und die am Ausgang einer Führungsrinne (32) angeordnet sind.

9. Vorrichtung nach Anspruch 7, dadurch gekennzeichnet, daß der Verschluß (36) aus dichtem Material besteht und zickzackförmig gefaltet ist, wobei eines seiner Enden an einem Flansch (35) befestigt ist, der in dem ringförmigen Raum (28) feststehend montiert ist, und das andere Ende an einem Flansch (37) befestigt ist, der in Längsrichtung auf den Stegen (38) im ringförmigen Raum geführt wird und auf einem Endlosband (39) befestigt ist, das mit Antriebsmitteln (40) in beide Richtungen, verbunden ist.

## Claims

1. A filtering and pressure stabilising device for a variable flow rate ventilation installation, of the type including, associated with the opening for the introduction of air into the ventilation unit, a progressively movable filter (10), equipped with means permitting the renewal of the active portion of the filter disposed opposite to the air passage opening, and a closure element (12) made of an impermeable material, intended to be placed against the filter (10) to partially or wholly cover the latter, this closure element being associated with means for controlling its movement, the movement control means being connected to a computer (18) which receives information from a sensor disposed in a fluid stream characterised in that the sensor ensures the measurement of the fluid pressure at the outlet of the ventilation unit (2), and in that the computer (18) is arranged so that the stabilisation of pressure is effected first of all by acting on the position of the closure element (12), then, when the closure element is in the position in which it completely uncovers the filter (10) by acting on the control means (8,9) thereof to effect at least its partial renewal.

2. A device according to Claim 1, characterised in that the computer (18) is associated with a timing mechanism which only takes into account the value of the measured pressure at the expiry of a certain period of time, ensuring that a stabilised pressure value is taken into account.

3. A device according to either of Claims 1 and 2, characterised in that the control means (8,9) for the movement of the filter (10) are associated with means for measuring the value of this movement, these measuring means reacting and activating an alarm system if, at the end of the replacement of a determined length of filter, the pressure is still not stabilised.

4. A device according to any one of Claims 1 to 3, characterised in that the filter (10) moves progressively by unwinding and is associated with an unwinding roller (8) braked in rotation, and a motorised winding roller (9).

5. A device according to any one of Claims 1 to 4, characterised in that the closure element is constituted by a sheet (12) of sealing material for unwinding - winding, associated with a motorised roller (13) and a roller (14) located at the other side of the air intake orifice, associated with resilient winding means (15) using wires or cables, fixed on the free edge of the closure element.

6. A device according to any one of Claims 1 to 5, characterised in that the upstream end of the air intake conduit (6) is equipped with a support surface for the filter having a convex shape, for example in the form of a part cylindrical surface having an axis parallel to the axes of the unwinding and winding rollers for the filter and the closure element, this convex surface being formed by a certain number of bars (7) against which the filter (10) bears.

7. A device according to any one of Claims 1 to 3, characterised in that it has a sealed/tight tubular sheath (22) connectable at its two ends to two connecting elements of a ventilation network, and containing a coaxial tubular element of smaller section having successively a smooth portion (25) connected to one of the openings of the sheath, a perforated portion (26) and a smooth and tapered end (29), the annular space (28) included between the tubular element and the sheath acting,
- in the region where the tubular element is smooth, as a housing for a tubular filter (30) stored in pleated form, this tubular filter covering both the perforated portion (26) of the tubular element and the tapered end (29) thereof and being associated with a traction mechanism driving it towards a recovery container (34) offset relative to the tubular sheath, and
- in the region where the tubular element is perforated, as a housing for a movable closure element (36) associated with control means intended to move it so that it covers to a greater or lesser extent the filter (30) covering this perforated portion (26) of the tubular element.

8. A device according to Claim 7, characterised in that the driving mechanism for the filter (30) includes two rollers (33) between which the filter is gripped, driven in opposite directions to one another, and disposed at the outlet of a guide spout (32).

9. A device according to Claim 7, characterised in that the closure element (36) is made of an impermeable material which has undergone accordeon pleating, one end of which is fixed to a collar (35) fixedly mounted in the annular space (28), and the other end of which is mounted on a collar (37) guided longitudinally on bars (38) in the annular space, and fixed on an endless belt (39), associated with means (40) for driving it in both directions.
